# EUROPEAN PATENT APPLICATION

(11) **EP 4 648 182 A1**
(43) Date of publication of application: **12.11.2025**
(21) Application number: 25170986.1
(22) Date of filing: 16.04.2025
(51) Int. Cl.: H01M 10/658, H01M 50/15, H01M 50/16, H01M 50/193, H01M 50/198, H01M 50/209, H01M 50/249, H01M 50/342, H01M 50/383

(54) **BATTERY MODULE**

(30) Priority: 17.04.2024 KR 20240051079
(71) Applicant: SAMSUNG SDI CO., LTD., Yongin-si, Gyeonggi-do 17084 (KR)
(72) Inventor: YOON, Seung Han, 17084 Yongin-si, Gyeonggi-do (KR); KIM, Myoung Kon, 17084 Yongin-si, Gyeonggi-do (KR)
(74) Representative: Gulde & Partner

(57) **Abstract**

A battery module including: a plurality of battery cells arranged in one direction, each of the plurality of battery cells including a vent in an upper side thereof, the vent having a thin film shape; and a protective member covering an upper side of the vent of each of the plurality of battery cells. The protective member being made of a foam heat insulating material including a plurality of pores.

## Description

### BACKGROUND

### 1. Field

Aspects of embodiments of the present disclosure relate to a battery module.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments of the present disclosure provide a battery module including a protective member made of a heat insulating material foam that covers a vent of a battery cell to prevent an igniting (or ignited) material generated in a battery cell experiencing an event (e.g., a thermal event) from entering a vent of another, adjacent battery cell, thus preventing further thermal runaway and propagation of heat.

These and other aspects and features of the present disclosure will be described in or will be apparent from the following description of embodiments of the present disclosure.

A first aspect of the present disclosure relates to a battery module, , which includes a plurality of battery cells arranged in one direction, each of which includes a vent in an upper side thereof, the vent having a thin film shape, and a protective member covering an upper side of the vent of each of the plurality of battery cells. The protective member is made of a foam heat insulating material including a plurality of pores. In other words, the protective member is made of a heat insulating material, wherein the heat insulating material is a foam comprising a plurality of pores (e.g. a porous heat insulating material).

Each of the plurality of battery cells may include an electrode assembly including a positive electrode, a separator, and a negative electrode, a case accommodating the electrode assembly, and a cap plate coupled to an opening in the case. The vent may be in a vent hole extending through the cap plate and may be configured to rupture in response to an increase in pressure in the case.

In each of the plurality of battery cells, the vent may have a notch that is thinner than other areas of the cap plate, and the vent may be mounted to a lower side of the cap plate.

A portion of the vent hole may be filled with the protective member.

The protective member may protrude upwardly above the cap plate.

The protective member may cover a portion of an upper side of the cap plate adjacent to the vent hole.

The battery module may further include an upper plate covering upper portions of the plurality of battery cells, and the upper plate may have a duct extending vertically through the upper plate at a position corresponding to the vent of each of the plurality of battery cells.

The duct may have an inner diameter less than an outer diameter of the protective member.

The protective member may have an upper edge area between the upper plate and the cap plate of each of the plurality of battery cells.

The protective member may have an upper edge area contacting a lower side of the upper plate.

A portion of the protective member on the vent may have a thickness in a range of 2 mm to 4 mm.

The protective member may include a silicone foam, a polyurethane foam, a mixture of a silicone foam and ceramic, or a mixture of a polyurethane foam and ceramic.

The protective member may have a foaming rate in a range of 130% to 150%.

A second aspect of the present disclosure relates to a method of manufacturing the battery module as disclosed above. The method comprises: providing a plurality of battery cells, each battery cell comprising a vent in an upper side thereof, the vent having a thin film shape. Applying a liquid curable heat insulating material to cover the upper side of the vent, and (then) curing the liquid curable heat insulating material to react to a foam comprising a plurality of pores and forming a protective member covering an upper side of the vent. Arranging the plurality of battery cells in one direction.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIGS. 1A and 1B are, respectively, a perspective view and a cross-sectional view of a battery cell according to an embodiment of the present disclosure;
FIG. 2 is a perspective view of a battery module according to an embodiment of the present disclosure;
FIGS. 3A and 3B are perspective views showing a battery pack according to an embodiment of the present disclosure;
FIGS. 4A and 4B are, respectively, a perspective view of a vehicle body and a side view of a vehicle according to an embodiment of the present disclosure;
FIGS. 5A and 5B are, respectively, an exploded perspective view of a battery rack and a perspective view of an energy storage system according to an embodiment of the present disclosure;
FIGS. 6A and 6B are, respectively, a perspective view of a battery module and a perspective view of the battery module with an upper plate mounted thereon according to an embodiment of the present disclosure; and
FIGS. 7A and 7B are, respectively, a cross-sectional view taken along the line 7a-7a in FIG. 6B and an enlarged view of the portion 7b in FIG. 7A.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical scope of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

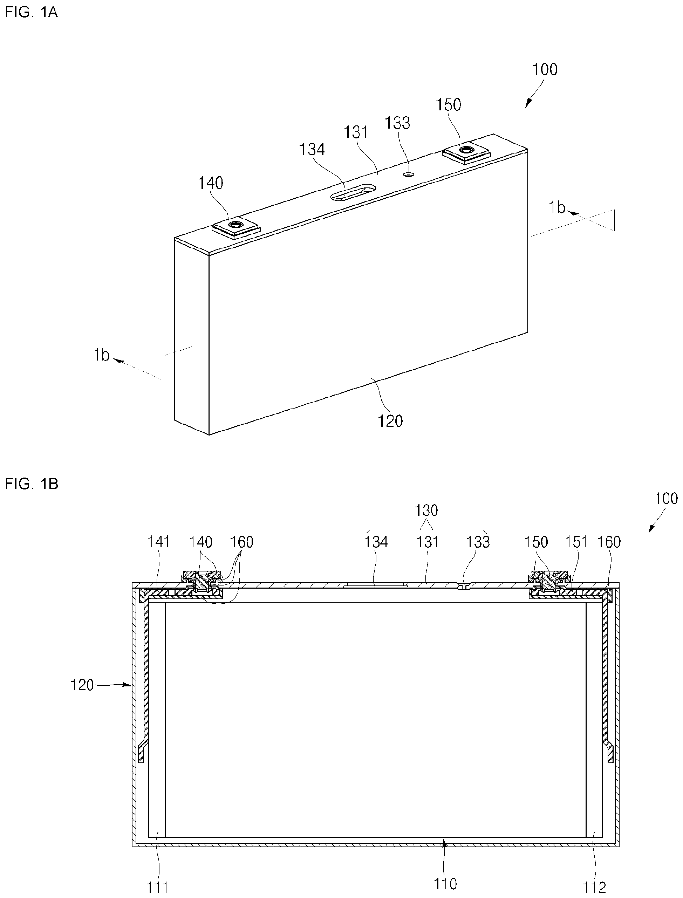

FIGS. 1A and 1B are, respectively, a perspective view and a cross-sectional view of a battery cell according to an embodiment of the present disclosure. FIG. 1B is a cross-sectional view taken along the line 1b-1b in FIG. 1A. Referring to FIGS. 1A and 1B, a battery cell 100 according to an embodiment may include at least one electrode assembly 110 formed by winding a positive electrode and a negative electrode with a separator, which is an insulator, interposed therebetween, a case 120 accommodating the electrode assembly 110, and a cap assembly 130 coupled to an opening in the case 120.

The battery cell 100 may be, for example, a lithium ion secondary battery having a prismatic shape. However, the present disclosure is not limited thereto. Aspects and features of the present disclosure may be applied to various types of batteries, such as a lithium polymer battery or a cylindrical battery.

The positive electrode and the negative electrode may have coated portions, which are areas formed by coating an active material on a current collector formed of a thin metal foil, and uncoated portions 111 and 112, which are areas of the current collector not coated with the active material.

The positive electrode and the negative electrode may be wound with the separator, which is an insulator, interposed therebetween. However, the present disclosure is not limited thereto. The electrode assembly 110 may be configured such that a plurality of sheet-shaped positive and negative electrodes are alternately stacked with separators interposed therebetween.

The case 120 may define the overall external appearance of the battery cell 100 and may be formed of conductive metal, such as aluminum, an aluminum alloy, or nickel-plated steel. The case 120 may provide a space in which the electrode assembly 110 is accommodated.

The cap assembly 130 may include a cap plate 131 covering the opening in the case 120, and the case 120 and the cap plate 131 may be made of a conductive material. Positive electrode and negative electrode terminals 140 and 150, which are respectively electrically connected to the positive electrode and the negative electrode, may be mounted to penetrate (e.g., to extend through) the cap plate 131 and protrude to the outside.

The positive electrode and negative electrode terminals 140 and 150, which protrude to the outside of the cap plate 131, may have a rivet structure and, thus, may be riveted to terminal plates or may be coupled and fixed to the terminal plates through welding.

However, the present disclosure is not limited thereto. The positive electrode and negative electrode terminals 140 and 150 may have threads and may be engaged with nut-shaped terminal plates.

The cap plate 131 may be formed of a thin plate and may be coupled to the opening in the case 120. A sealing cap 133 may be mounted to the cap plate 131 to seal an electrolyte injection hole (e.g., an electrolyte injection opening) after injection of an electrolyte through the electrolyte injection hole. A vent 134, in which a notch is formed, may be mounted to the cap plate 131. In some embodiments, the vent 134 may block (e.g., may seal) a vent hole (e.g., a vent opening) formed in the cap plate 131. In some embodiments, the vent 134 may be coupled or welded to a region (e.g., region of the cap plate) around the vent hole. The vent 134 may be made of aluminum. The vent 134 may be a thin film having a thickness in a range of (about) 2 mm to (about) 4 mm.

The positive electrode and negative electrode terminals 140 and 150 may be electrically connected to current collectors, which include first and second current collectors 141 and 151 (hereinafter referred to as positive electrode and negative electrode current collectors, respectively) welded to the positive electrode uncoated portion 111 or the negative electrode uncoated portion 112.

For example, the positive electrode and negative electrode terminals 140 and 150 may be coupled to the positive electrode and negative electrode current collectors 141 and 151, respectively, through welding. However, the present disclosure is not limited thereto. The positive electrode and negative electrode terminals 140 and 150 and the positive electrode and negative electrode current collectors 141 and 151 may be respectively integrally formed with each other.

An insulating member 160 may be mounted between the positive electrode and negative electrode terminals 140 and 150 and the cap plate 131 and between the positive electrode and negative electrode current collectors 141 and 151 and the cap plate 131 to prevent electrical contact therebetween. The insulating member 160 may also be mounted between the electrode assembly 110 and the cap plate 131.

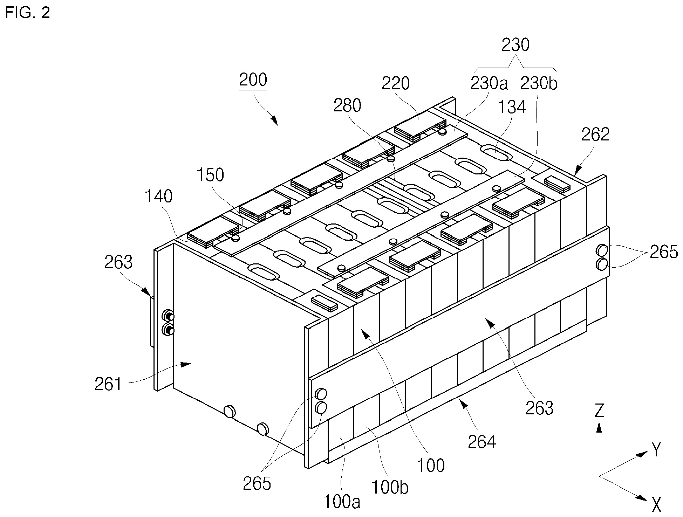

FIG. 2 is a perspective view of a battery module 200 according to an embodiment of the present disclosure. Referring to FIG. 2, the battery module 200 according to an embodiment of the present disclosure may include a plurality of battery cells 100, each including terminal units 140 and 150, and arranged in one direction, a connection tab 220 connecting one battery cell 100a to another adjacent battery cell 100b, and a protection circuit module 230 connected at one side end portion thereof to the connection tab 220. The protection circuit module 230 may be a battery management system (BMS). The connection tab 220 may include a body portion contacting the terminal units 140 and 150 of the adjacent battery cells 100a and 100b and an extension portion extending from the body portion to be connected to the protection circuit module 230. The connection tab 220 may be a bus bar.

As described above, the battery cell 100 may include a battery case, an electrode assembly, and an electrolyte. The electrode assembly and the electrolyte may be accommodated in the battery case and may electrochemically react to generate energy. The battery cell 100 may be provided, on one side thereof, with terminal units 140 and 150 electrically connected to the connection tab 220 and a vent 134, which acts as a discharge passage for gas generated in the battery cell 100. The terminal units 140 and 150 of the battery cell 100 may be a positive electrode terminal 140 and a negative electrode terminal 150, which have different polarities from each other. The terminal units 140 and 150 of the adjacent battery cells 100a and 100b may be electrically connected to each other in series or in parallel via the connection tab 220, which will be described in more detail later. Although the terminal units 140 and 150 have been described above as being connected to each other in series, the present disclosure is not limited to this connection structure. Any of various, suitable connection structure may be used. The number and arrangement of battery cells 100 are not limited to that shown in FIG. 2 and may be variously changed.

The plurality of battery cells 100 may be arranged in one direction such that wide surfaces thereof face each other. The arranged battery cells 100 may be fixed by housings 261, 262, 263, and 264. The housings 261, 262, 263, and 264 may include a pair of end plates 261 and 262 facing the wide surfaces of the battery cells 100 and side plates 263 and a bottom plate 264, which interconnect the pair of end plates 261 and 262. The side plates 263 may support side surfaces of the battery cells 100, and the bottom plate 264 may support bottom surfaces of the battery cells 100. The pair of end plates 261 and 262, the side plates 263, and the bottom plate 264 may be connected to each other by a fastener, such as a bolt 265. In some embodiments, the bottom plate 264 may include or may be referred to as a cooling plate.

The protection circuit module 230 may have an electronic component and a protection circuit mounted thereon and may be electrically connected to the connection tab 220, which will be described in more detail later. The protection circuit module 230 may include a first protection circuit module 230a and a second protection circuit module 230b, which extend at different positions in a direction in which the plurality of battery cells 100 is arranged. The first protection circuit module 230a and the second protection circuit module 230b may be spaced apart from each other by an interval (e.g., a predetermined interval) and may be disposed parallel to each other and electrically connected to the connection tabs 220 adjacent thereto. For example, the first protection circuit module 230a may be disposed on one side of the upper surface of each of the battery cells 100 to extend in the direction in which the battery cells 100 are arranged, and the second protection circuit module 230b may be disposed on the opposite side of the upper surface of each of the battery cells 100 to extend in the direction in which the battery cells 100 are arranged. The second protection circuit module 230b may be located to be spaced an interval from the first protection circuit module 230a, with the vents 134 therebetween, and may be disposed parallel to the first protection circuit module 230a. Because the two protection circuit modules 230a and 230b are disposed in parallel at an interval therebetween and extend in the direction in which the battery cells 100 are arranged, an area for (or of) a printed circuit board (PCB) constituting the protection circuit module may be reduced or minimized. Because the protection circuit module 230 is divided into two separate protection circuit modules 230a and 230b, an unnecessary area of the PCB may be omitted. The first protection circuit module 230a and the second protection circuit module 230b may be connected to each other via a conductive connection member 280. One side of the connection member 280 may be connected to the first protection circuit module 230a, and the other side of the connection member 280 may be connected to the second protection circuit module 230b, such that the two protection circuit modules 230a and 230b may be electrically connected to each other.

Connection between the two protection circuit modules 230a and 230b may be achieved through any one of soldering, resistance welding, laser welding, and projection welding.

The connection member 280 may be, for example, an electric wire. In some embodiments, the connection member 280 may be made of an elastic or flexible material. Voltages, temperatures, and currents of the battery cells 100 may be monitored (e.g., measured) and managed by using the connection member 280. For example, information about voltages, currents, and temperatures received by the first protection circuit module 230a from the connection tabs 220 adjacent thereto and information about voltages, currents, and temperatures received by the second protection circuit module 230b from the connection tabs 220 adjacent thereto may be managed in an integrated manner by the protection circuit modules 230a and 230b through the connection member 280.

If the battery cell 100 swells, the force (e.g., impact) may be absorbed by the connection member 280 due to elasticity or flexibility of the connection member 280, such that the first and second protection circuit modules 230a and 230b may be prevented from being damaged.

The shape and structure of the connection member 280 are not limited to those shown in FIG. 2.

Because the protection circuit module 230 is divided into the first and second protection circuit modules 230a and 230b, an area of a PCB constituting the protection circuit module 230 may be reduced or minimized, and thus, space in the battery module 200 may be secured, which may facilitate not only a coupling operation of connecting the protection circuit module 230 to the connection tab 220 but also a repair operation upon detection of malfunction of the battery module, thereby improving operation efficiency.

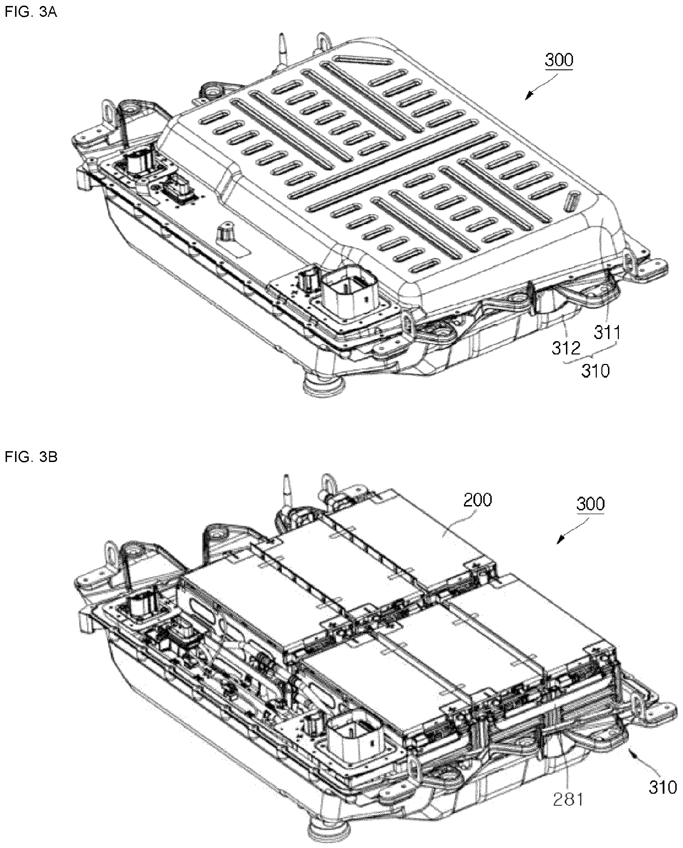

FIGS. 3A and 3B are perspective views showing a battery pack 300 according to an embodiment of the present disclosure. The battery pack 300 may include a plurality of battery modules 200 and a housing 310 configured to accommodate the plurality of battery modules 200. For example, the housing 310 may include a first housing 311 and a second housing 312, which are coupled to each other in directions facing each other with the plurality of battery modules 200 interposed therebetween. The plurality of battery modules 200 may be electrically connected to each other by using bus bars 281. The plurality of battery modules 200 may be electrically connected to each other in series, in parallel, or in a combination thereof, so that a desired (or specified) electrical output may be provided.

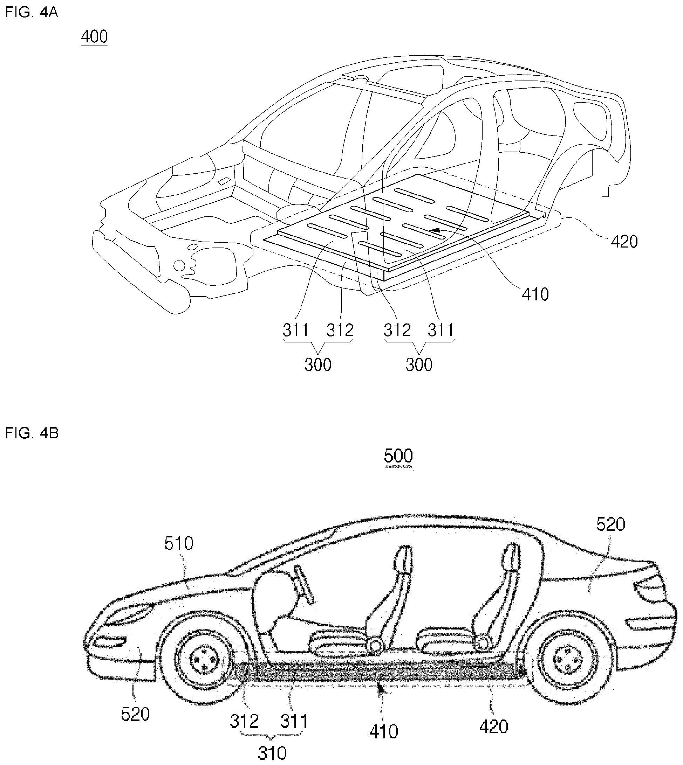

FIGS. 4A and 4B are, respectively, a perspective view of a vehicle body 400 and a side view of a vehicle 500 according to an embodiment of the present disclosure. As shown in FIG. 4A, the battery pack 300 may include a battery pack cover 311 (which may correspond to the first housing 311), which is a portion of a vehicle underbody 410, and a pack frame 312 (which may correspond to the second housing 312), which is disposed beneath the vehicle underbody 410. The battery pack cover 311 and the pack frame 312 may be integrally formed with a vehicle bottom portion 420. The vehicle underbody 410 may separate the interior and the exterior of the vehicle from each other, and the pack frame 312 may be disposed outside the vehicle.

As shown in FIG. 4B, the vehicle 500 may include the vehicle body 400 (see, e.g., FIG. 4A) and various parts coupled to the vehicle body 400, such as a hood 510 located at the front portion of the vehicle 500 and fenders 520 located at the front and rear portions of the vehicle 500. The vehicle 500 may include the battery pack 300, including the battery pack cover 311 and the pack frame 312, and the battery pack 300 may be coupled to the vehicle body 400.

In some embodiments, a secondary battery may be used as a battery module formed by (or including) a plurality of unit battery cells connected in series and/or in parallel to each other to provide high energy density. For example, the battery module may be formed by interconnecting electrode terminals of a plurality of unit battery cells to provide a high-output secondary battery according to a desired (or specified) amount of power. The structure in which a plurality of battery modules is connected in series and/or in parallel to each other may be referred to as a battery pack.

The battery module may be constructed in a block design or a modular design. In the block design, each battery cell may be coupled to a common current collecting structure and a common battery management system. In the modular design, a plurality of battery cells may be connected to each other to form a sub-module, and a plurality of sub-modules may be connected to each other to form a battery module. A battery management operation may be implemented at a module level or a sub-module level, thus improving interchangeability of components. To provide a battery system, one or more battery modules may be mechanically and electrically integrated, may be equipped with a thermal management system, and may be configured to communicate with one or more electricity consumers.

The mechanical integration of the battery modules may include providing a cooling plate and placing individual battery cells or sub-modules thereon. The fixing of the battery cells or the sub-modules may be achieved by depressed portions formed in the cooling plate or mechanical interconnects, such as bolts or screws. In other embodiments, the battery cells or the sub-modules may be restrained by fastening side plates to the side surfaces of the cooling plate.

To provide thermal control of the battery pack, a thermal management system may be employed (or included) to safely use at least one battery module by effectively radiating, discharging, and/or dissipating heat generated from the secondary battery. If heat is not sufficiently radiated/discharged/dissipated, a temperature deviation may occur between the battery cells, such that at least one battery module may not generate a desired (or designed) amount of power. Further, an increase in internal temperature may cause an abnormal reaction to occur therein, leading to deterioration in the charging/discharging performance of the secondary battery and shortening of the lifespan thereof. Therefore, it is desirable to employ a cell cooling mechanism for effectively radiating, discharging, and/or dissipating heat generated in the cells.

Thermal runaway is an example of an abnormal operational state of a battery cell that may occur due to a significantly overheated or overcharged lithium ion battery cell. The critical temperature for transition to thermal runaway may be (about) 150 °C or higher, and heat may propagate from a battery cell having defective electrical contact or short circuit to another battery cell adjacent thereto. Thermal runaway may be a self-accelerating chemical reaction in a cell. Such thermal runaway may generate large amounts of heat and gas until all available materials are exhausted. During thermal runaway, a defective cell may be heated to a cell temperature of (about) 800 °C or higher and may discharge a large amount of hot gas to the interior of the system. The battery cell may typically include a vent hole (e.g., a vent opening) formed therein to discharge a vent gas when pressure in the battery cell exceeds a reference pressure. In a cell case having a high energy density (e.g., (about) 200 Wh/kg), a discharged vent gas may typically have a temperature of (about) 500 °C and a gas velocity of (about) 300 m/s.

During thermal runaway, a large amount of heat may propagate to adjacent cells via the vent gas. Because these cells have been heated by the faulty cell due to thermal conduction via side plates, base plates, and/or electrical connectors thereof, the adjacent cells are likely to enter thermal runaway as well. This may result in thermal runaway propagation and a battery fire engulfing the entire battery system.

Generally, an energy storage system, which is installed in a container, an enclosure, a building, or a dedicated building, may include a fire extinguishing system to extinguish a fire upon occurrence of a fire due to electric shock, short circuit, an external surge, or the like.

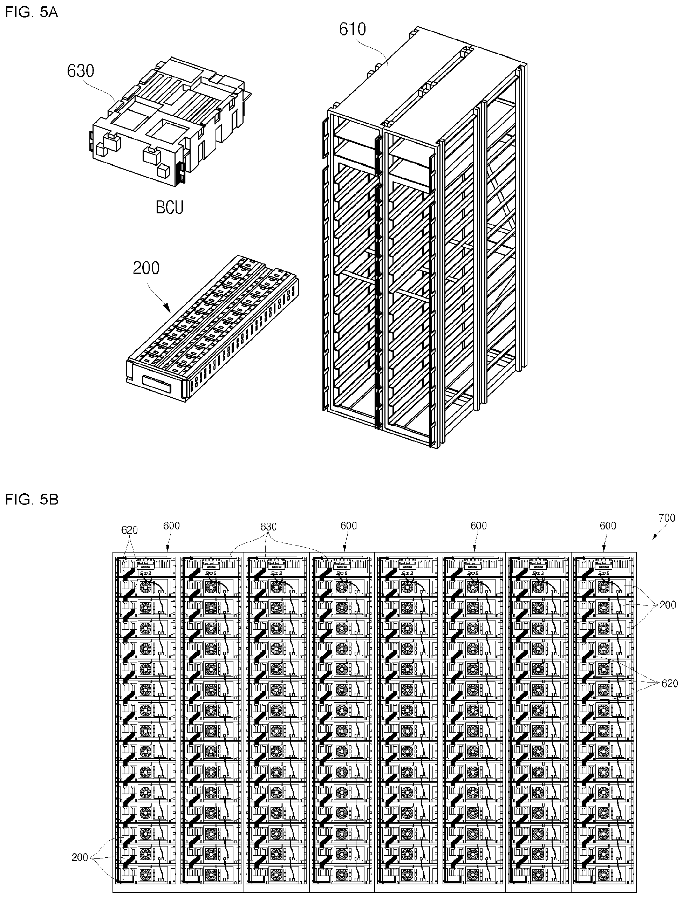

FIGS. 5A and 5B are, respectively, an exploded perspective view of a battery rack and a front view of an energy storage system including a plurality of battery racks according to an embodiment of the present disclosure.

A battery rack 600 may include a rack frame 610 and a plurality of battery modules 200 accommodated in the rack frame 610. The rack frame 610 may have therein a space in which the plurality of battery modules 200 may be stacked and accommodated in a vertical direction. Although the rack frame 610 is illustrated as accommodating the plurality of battery modules 200 stacked in two rows, the rack frame 610 may have a structure in which the plurality of battery modules 200 is stacked in one row therein. However, the present disclosure is not limited to any specific structure of the rack frame 610. After being accommodated in the rack frame 610, the plurality of battery modules 200 may be electrically connected to each other via bus bars 620. In some embodiments, the battery rack 600 may include a battery control unit (BCU) 630. The BCU 630 may be disposed at a top position in the rack frame 610.

The energy storage system 700 may include at least two battery racks 600. In some embodiments, the battery control units (BCUs) 630 of the plurality of battery racks 600 may be connected to each other via a universal communication line (e.g., controller area network (CAN)).

In some embodiments, each of the battery racks 600 may be connected to a high-power terminal via a fuse and a switch. The BCU 630 may control driving of (e.g., a state of) the fuse and the switch based on the measured physical qualities of the plurality of battery modules 200 included in the battery rack 600, thereby controlling voltage output through the high-power terminal. For example, the high-power terminal may be an input/output terminal of the battery rack 600 or the energy storage system 700.

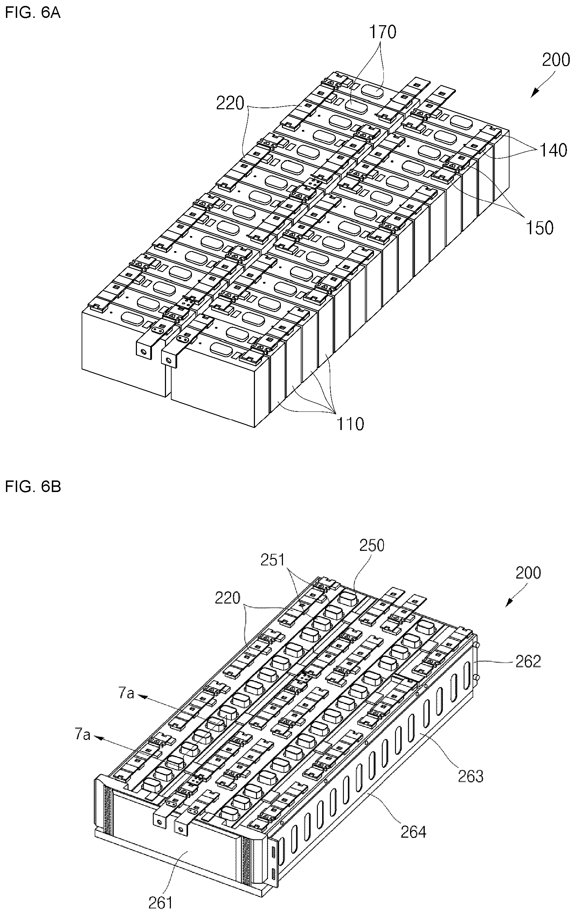

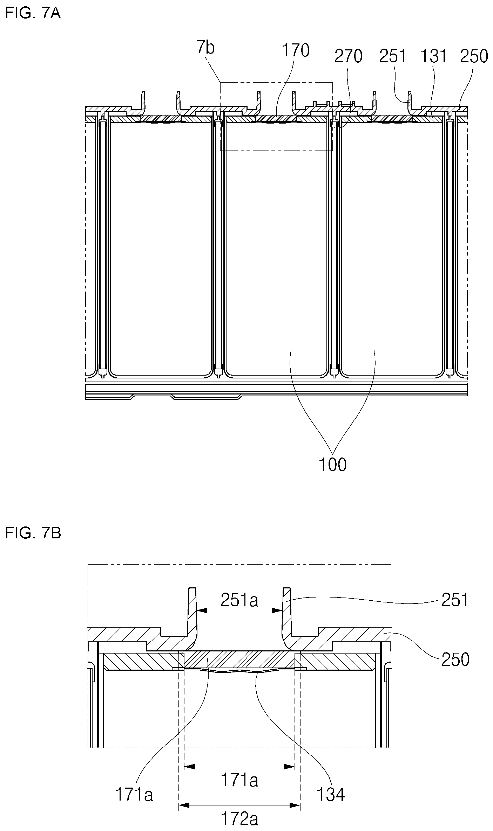

FIGS. 6A and 6B are, respectively, a perspective view of the battery module 200 according to an embodiment of the present disclosure and a perspective view of the battery module 200 having an upper plate 250 mounted thereon according to an embodiment of the present disclosure. FIG. 7A is a cross-sectional view taken along the line 7a-7a in FIG. 6B, and FIG. 7B is an enlarged view of the portion 7b in FIG. 7A.

The plurality of battery cells 100 of the battery module 200 may be disposed such that long (or wide) side surfaces thereof are adjacent to each other. The structure of the battery cell 100 may be similar to that of the battery cell 100 described above in connection with FIGS. 1A and 1B. According to embodiments of the present disclosure, each of the battery cells 100 may further include a protective member 170 configured to cover the upper side (e.g., an upper surface) of the vent 134. The protective member 170 may be a foam (e.g., a micro closed cell) heat insulating member. The vent 134 may be a thin film and may be thinner than the other area(s) of the cap plate 131. The vent 134 may have a notch to rupture if pressure in the case 120 increases (e.g., increases to a reference pressure or higher). The vent 134 may be mounted to the lower side (e.g., an inner surface) of the cap plate 131. For example, the vent 134 may be mounted to the lower side of a vent hole in the cap plate 131, and the upper side of the vent hole in the cap plate 131 may be filled with the protective member 170.

In some embodiments, the battery module 200 may further include a heat insulating member 270 interposed between adjacent battery cells 100 to slow or block heat transfer therebetween. For example, the heat insulating member 270 may be disposed to face the long side surfaces of adjacent battery cells 100. The heat insulating member 270 may be formed as a composite layer in which a flame-retardant or nonflammable sheet, which does not catch fire, and a heat insulating sheet that blocks heat propagation are combined or may be formed as a single sheet including at least one of the flame-retardant or nonflammable sheet or the heat insulating sheet. For example, the flame-retardant sheet may include mica, and the heat insulating sheet may include a ceramic paper represented by a ceramic fiber (e.g., a bio-soluble fiber) including an alkaline earth metal. However, the present disclosure is not limited to these materials.

If an event (e.g., a thermal event) occurs in one battery cell 100, which causes pressure in the corresponding battery cell 100 to increase, the vent 134 may rupture to discharge an internal material. The protective member 170 of an adjacent battery cell 100 may prevent the discharged internal material from entering the adjacent battery cell 100 through the vent 134, thereby preventing additional thermal runaway and propagation of heat. The protective member 170 may be made of a foam material that has a heat insulating property but that does not affect operation of the vent 134.

In some embodiments, the protective member 170 may include a material comprising at least one of silicone, polyurethane, or a ceramic. For example, the protective member 170 may include (may consist of) a heat insulating material comprising a silicone foam, a polyurethane foam, a mixture of a silicone foam and ceramic, or a mixture of a polyurethane foam and ceramic. For example, a foaming rate of the heat insulating material of the protective member 170 may be in a range of (about) 130% to (about) 150%. Herein, the foaming rate R (or foaming ratio) is the ratio of the volume after curing V₁ to the volume before curing V₀ in percent. For example, foaming rate R is determined according to R [%] = (V₁/V₀)*100. If the foaming rate of the heat insulating material of the protective member 170 is less than (about) 130%, the vent 134 may not operate when the pressure in the battery cell 100 increases to a level at which the vent 134 should rupture, thereby deteriorating the safety of the battery cell 100. If the foaming rate of the heat insulating material of the protective member 170 is greater than (about) 150%, heat insulation of the vent 134 may not be ensured. The protective member 170 may include pores having a size in a range of (about) 1.4 µm to (about) 535 µm, and the pores may be evenly distributed throughout the protective member 170. The protective member 170 may include pores having a pore size distribution in a range of 1.4 µm to 535 µm. The pore size distribution can be determined by mercury porosimetry or gas adsorption according to ISO 15901-1:2016.

The protective member 170 may be a liquid type. The protective member 170 may be applied (e.g. as at least one liquid curable monomer) to cover the upper side of the vent 134 and (e.g. the at least one liquid curable monomer) may then be cured (to form protective member 170). The heat insulating material of the protective member 170 may be a curable porous polymer foam. The curing may comprise light irradiation or heat irradiation. For example, a guide may be mounted to expose the upper side of the vent 134, and then the protective member 170 may be applied to the exposed upper side of the vent 134. The area exposed by the guide may be larger than the size of the vent 134. Thus, the protective member 170 may cover not only the vent 134 but also a portion of the cap plate 131 around the vent 134. The protective member 170 may protrude upwardly above the upper surface of the cap plate 131, and a portion of the protective member 170 may be in contact with the upper surface of the cap plate 131. The protective member 170 may be in contact with the upper side of the vent 134 and a sidewall of the vent hole in the cap plate 131. For example, the protective member 170 may have a substantially "T" shape. An outer diameter 172a of a portion of the protective member 170 covering the upper side of the cap plate 131, which is the upper side of the vent hole, may be larger than an outer diameter 171a of a portion of the protective member 170 disposed in the vent hole.

The thickness of a portion of the protective member 170 on the vent 134 may be in a range of (about) 2 mm to (about) 4 mm. If the thickness of the protective member 170 is less than (about) 2 mm, the vent 134 may not act (or may not sufficiently act) as a heat insulating member. If the thickness of the protective member 170 is greater than (about) 4 mm, the vent 134 may not easily rupture when an internal pressure increases.

In the battery module 200, an upper plate 250 may be coupled to housings 261, 262, 263, and 264 while covering the upper portions of the battery cells 100. The housings 261, 262, 263, and 264 may include a pair of end plates 261 and 262 facing each other and side plates 263 and a bottom plate 264, which interconnect the pair of end plates 261 and 262.

The terminal units 140 and 150 of the battery cells 100 may be exposed above the upper plate 250. The connection tabs 220 may be coupled to the terminal units 140 and 150, so that the battery cells 100 may be connected to each other in series, in parallel, or in a combination thereof.

The upper plate 250 may have ducts 251 corresponding to (e.g., aligned with or respectively aligned with) the vents 134 formed in the upper surfaces of the plurality of battery cells 100. The ducts 251 may be arranged in one direction, for example, the longitudinal direction. The number of ducts 251 may correspond to the number of battery cells 100 provided in the battery module 200. The ducts 251 may also be disposed in two rows on the battery cells 100 arranged in two rows in the battery module 200. The ducts 251 may protrude upwardly relative to the other area(s) of the upper plate 250. Each duct 251 may extend upwardly by a length (e.g., a predetermined length) to provide a movement passage for gas discharged through the corresponding vent 134. For example, gas discharged due to operation of the vent 134 of the battery cell 100 may move upwardly along the duct 251 in the upper plate 250.

The outer diameters 171a and 172a of the protective member 170 may be larger than an inner diameter 251a of the duct 251 of the upper plate 250. The duct 251 may act as a discharge movement passage for gas discharged due to rupture of the notch in the vent 134 of the battery cell 100 and may prevent the protective member 170 from being separated from the battery cell 100.

A portion of the lower surface of the upper plate 250 adjacent to the duct 251 may be in contact with an upper edge area of the protective member 170. The protective member 170 may be fixed such that the upper area thereof is interposed between the upper plate 250 and the cap plate 131 of the battery cell 100. The protective member 170 may be torn upon rupture of the vent 134 to discharge gas in the battery cell 100 to the outside. The upper plate 250 may prevent the protective member 170 from being separated from the vent 134.

Table 1 shows experimental results indicating the rupture pressure of the vent 134 according to an embodiment of the present disclosure in which the protective member 170 is included and the rupture pressure of the vent 134 in a comparative example in which the protective member 170 is omitted. For example, the protective member 170 formed on the vent 134 may have a thickness of 2 mm and a foaming rate of 130%.

**Table 1**

| | Rupture Pressure | |
|---|---|---|
| | (Unit: bar. spec 6±1 bars) | |
| Battery Cell # | Comparative Example | Embodiment |
| 1 | 5.96 | 6.38 |
| 2 | 5.99 | 6.26 |
| 3 | 5.98 | 6.38 |
| 4 | 6.07 | 6.36 |
| 5 | 5.95 | 6.31 |
| 6 | 6.04 | 6.31 |
| 7 | 5.96 | 6.29 |
| 8 | 5.98 | 6.28 |
| 9 | 6.03 | 6.23 |
| 10 | 6.12 | 6.23 |
| 11 | 5.80 | 6.31 |
| 12 | 6.08 | 6.18 |
| 13 | 5.92 | 6.13 |
| 14 | 6.03 | 6.22 |
| 15 | 6.06 | 6.21 |
| Max | 6.12 | 6.38 |
| Min | 5.80 | 6.13 |
| Average | 6.00 | 6.27 |
| Standard Deviation | 0.07 | 0.07 |

As shown in Table 1, the rupture pressure of the battery cell 100 according to embodiments of the present disclosure including the protective member 170 and the rupture pressure of the comparative example omitting the protective member 170 have a difference of (about) 0.27 bar. A reference rupture pressure is 6 bars, and the error range of the rupture pressure is ±1 bar, which is a range in which there is no influence on rupture of the battery cell 100. Thus, the protective member 170 may not affect rupture of the vent 134 while exhibiting a heat insulating effect of blocking movement of a flame through the vent 134.

Due to the protective member 170 provided in (or on) the battery cell 100, even if a fire occurs in one battery cell 100 of the battery module 200 and the vent 134 ruptures, additional ignition may be suppressed or avoided due to movement of an internal substance (e.g., a flame) to another adjacent battery cell 100 through the vent 134, thus preventing heat propagation to adjacent battery cells 100.

Such a battery module 200 may also be applied to the battery pack 300, the battery rack 600, or the energy storage system 700, and may block movement of a flame through the vent 134 by using the protective member 170, thus improving safety.

As is apparent from the above description, a battery module according to embodiments of the present disclosure includes a protective member made of a foam heat insulating material and covering a vent of a battery cell, which prevents an igniting (or ignited) material generated in one battery cell in which an event occurs from entering another, adjacent battery cell through a vent of the adjacent battery cell, thus preventing additional thermal runaway and propagation of heat.

Aspects and features of the present disclosure are not limited to those described above, and other unmentioned aspects and features will be apparent to those skilled in the art from the above description of embodiments.

While the disclosure has been hereinabove described in connection with only a limited number of embodiments and drawings, the present disclosure is not limited thereto, and it should be understood that various changes and modifications may be made by those skilled in the art within the scope of the disclosure as defined by the appended claims and their equivalents.

## Claims

1. A battery module comprising:
a plurality of battery cells (100) arranged in one direction, each of the plurality of battery cells (100) comprising a vent (134) in an upper side thereof, the vent (134) having a thin film shape; and
a protective member (170) covering an upper side of the vent (134) of each of the plurality of battery cells (100), the protective member (170) being made of a heat insulating material, the heat insulating material being a foam comprising a plurality of pores.

2. The battery module as claimed in claim 1, wherein each of the plurality of battery cells (100) comprises:
an electrode assembly (110) comprising a positive electrode, a separator, and a negative electrode;
a case (120) accommodating the electrode assembly (110); and
a cap plate (131) coupled to an opening in the case (120),
wherein the vent (134) is in a vent hole extending through the cap plate (131) and being configured to rupture in response to an increase in pressure in the case (120).

3. The battery module as claimed in claim 2, wherein the vent (134) has a notch that is thinner than other areas of the vent (134), and
wherein the vent (134) is mounted to a lower side of the cap plate (131).

4. The battery module as claimed in claims 2 or 3, wherein a portion of the vent hole is filled with the protective member (170).

5. The battery module as claimed in one of claims 2 to 4, wherein the protective member (170) protrudes upwardly above the cap plate (131).

6. The battery module as claimed in one of claims 2 to 5, wherein the protective member (170) covers a portion of an upper side of the cap plate (131) adjacent to the vent hole.

7. The battery module as claimed in one of the preceding claims, further comprising an upper plate (250) mounted covering upper portions of the plurality of battery cells (100),
wherein the upper plate (250) comprises a duct (251) extending vertically through the upper plate (250) at a position corresponding to the vent (134) of each of the plurality of battery cells (100).

8. The battery module as claimed in claim 7, wherein the duct (251) has an inner diameter (251a) less than an outer diameter (171a, 172a) of the protective member (170).

9. The battery module as claimed in one of claims 7 or 8, wherein the protective member (170) comprises an upper edge area between the upper plate (250) and the cap plate (131) of each of the plurality of battery cells (100).

10. The battery module as claimed in one of claims 7 or 8, wherein the protective member (170) has an upper edge area contacting a lower side of the upper plate (250).

11. The battery module as claimed in one of the preceding claims, wherein a portion of the protective member (170) on the vent (134) has a thickness in a range of 2 mm to 4 mm.

12. The battery module as claimed in one of the preceding claims, wherein the heat insulating material of the protective member (170) comprises a silicone foam, a polyurethane foam, a mixture of a silicone foam and ceramic, or a mixture of a polyurethane foam and ceramic.

13. The battery module as claimed in one of the preceding claims, wherein the heat insulating material of the protective member (170) has a foaming rate in a range of 130% to 150%.

14. A method of manufacturing the battery module of claim 1, the method comprising:
providing a plurality of battery cells (100), each comprising a vent (134) in an upper side thereof, the vent (134) having a thin film shape,
applying a liquid curable heat insulating material to cover the upper side of the vent (134);
curing the liquid curable heat insulating material to react to a foam comprising a plurality of pores and forming a protective member (170) covering an upper side of the vent (134); and
arranging the plurality of battery cells (100) in one direction.
